Europäisches Patentamt

(19) European Patent Office

Office européen des brevets

(11) Publication number: **0 211 641**
**B1**

# EUROPEAN PATENT SPECIFICATION

(12)

(45) Date of publication of the patent specification:
**24.10.90**

(21) Application number: **86305994.5**

(22) Date of filing: **04.08.86**

(51) Int. Cl.⁵: **D04B 1/24**

(54) Method of manufacturing knitted briefs.

| | |
|---|---|
| (30) Priority: **21.08.85  GB 8521117** | (73) Proprietor: **PANTY CANDY LIMITED, 4th Floor, Printing House 18 Ice House Street, Central(HK)** |
| (43) Date of publication of application: **25.02.87 Bulletin 87/9** | (72) Inventor: **van Laar, Anton, Schellingerlaan 17, NL-3971 BX Driebergen(NL)** Inventor: **Wright, Kenneth, Gladstone House Pepper's Lane Burton Lazars, Melton Mowbray Leicestershire(GB)** |
| (45) Publication of the grant of the patent: **24.10.90 Bulletin 90/43** | |
| (84) Designated Contracting States: **AT BE CH DE FR IT LI LU NL SE** | (74) Representative: **Spoor, Brian et al, c/o E.N. LEWIS & TAYLOR 144 New Walk, Leicester, LE1 7JA(GB)** |
| (56) References cited: **FR-A- 2 023 636** **FR-A- 2 110 558** **US-A- 1 831 192** **US-A- 4 527 403** | |

ACTORUM AG

## Description

The present invention relates to the manufacture of knitted briefs.

By briefs is meant a garment comprising a body portion adapted to cover the lower portion of a wearer's trunk from the waist downwards to and beneath the crotch, and having therein leg openings at respectively opposite sides of the crotch portion which closes the garment at its lower end.

Figure 1 of British Patent No. 1 485 952 illustrates the profile of the flat knitted brief blank traditionally produced prior to side seaming into a brief proper. The blank profile consists of spaced generally rectangular portions connected by way of respective adjoining trapezium-shaped portions, the narrower ends of which are connected by way of an intervening bridge portion. In use, the rectangular portions form the front and back of the ultimate briefs, the edges of the trapezium shaped portions from the leg openings and the intervening bridge portion forms the crotch.

Historically, a blank of the above shape was produced either by cutting from flat fabric or by walewise fashioning by transference of loops on a straight-bar knitting machine. The above identified British patent however discloses a method of knitting a seamless tubular blank on a circular seamless hose machine prior to slitting the tube to provide a flattened blank of the required profile.

FR-A 2 110 558 discloses a method of making a single brief from a length of tubularly knitted fabric. The tube is cut longitudinally along a curve to provide a concave surface for the leg opening in the finished brief. After cutting, the brief is folded into brief form and finished by completing the waistband and leg openings.

The method of FR-A 2 110 558 does not lend itself to automatic brief production. Thus, not only is only one brief produced for each tubular length of fabric but the cutting along a curve and the finishing steps needed are all disadvantageous.

In accordance with the present invention there is provided a method of knitting a plurality of brief blanks upon a circular knitting machine which comprises knitting a shaped tube having a plurality of brief blanks inter-connected in side-by-side relationship at walewise separation positions, the tube having knitted integral waistband portions at each end thereof with the length of the tube between the waistband portions being of hourglass configuration obtained by needle selection, the fabric on either side of the walewise separation positions being knitted such that when the tube is slit walewise the margin around the leg openings in the finished brief is caused to roll over inwardly of the blank to provide a finished run-proof selvedge.

The method may include the steps of slitting the tube walewise as it is being knitted on the machine to sever the connection between the inter-connected blanks on the machine, and coursewise separating successive blanks to provide a plurality of separated brief blanks of the required form.

Alternatively, the method may include the steps of coursewise separating a length of tube containing a plurality of blanks inter-connected in side-by-side relationship and slitting the separated tube walewise to sever the connection between the interconnected blanks to provide a plurality of separated brief blanks of the required form.

The tube may be slit walewise a plurality of times to provide a corresponding plurality of brief blanks. Alternatively, where two blanks are involved, the tube may for example be collapsed and the two walewise slits performed simultaneously, for example by a common hot wire device.

The invention also provides brief blanks whenever knitted by the method of the invention.

The invention will now be described further by way of example with reference to the accompanying drawings in which:

Fig. 1 shows, in diagrammatic form, an unslit, waisted tube as taken down from a circular knitting machine, the knitted loop structure for the indicated parts being as given to the right of the Fig., in Figs. 1A, 1B, 1C and 1D.

Fig. 2 shows one of the opened out flat knitted brief blanks produced from the knitted tube shown in Fig. 1,

Fig. 3 illustrates the blank of Fig. 2 folded over into brief form, ready for seaming,

Fig. 4 illustrates briefs completed from the folded over blank of Fig. 3, and

Figure 5 illustrates an unslit waisted tube containing connected brief blanks for a ladies brief and a childs brief.

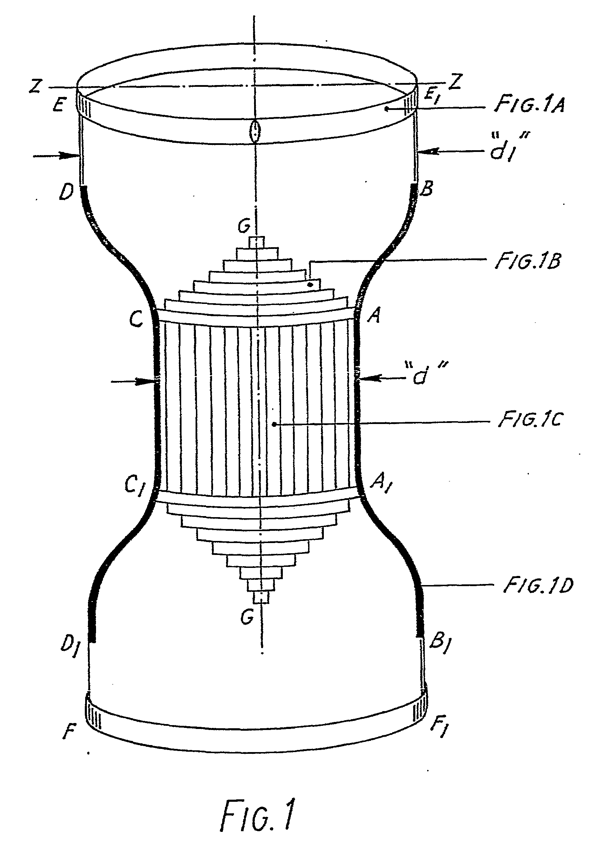

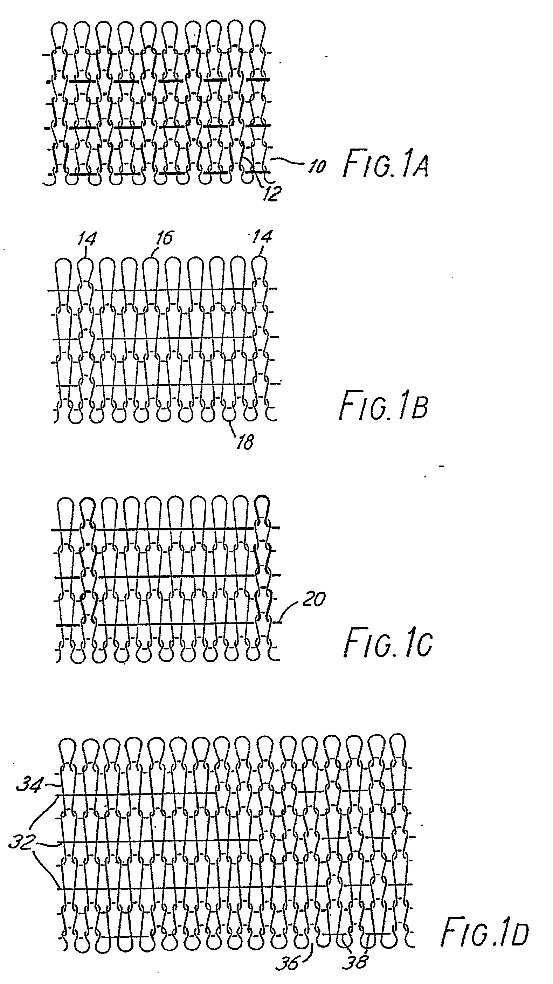

A waisted tube shown in Fig. 1 is knitted by wholly rotary knitting on a multi-feed circular knitting machine. The tube consists of two connected brief blanks of the required generally hourglass form. In Fig. 1 the blanks are shown in overlying relationship, the portions E, $E_1$ and F, $F_1$ alternatively forming the waist band of the briefs produced from the upper brief blank. In order to facilitate separation of the two blanks, a number of needles, typically three, are omitted at diametrically opposite portions of the tube indicated at Z, Z.

Half of the waistbands for each of the two blanks is knitted first, the knitted structure being as illustrated in Fig. 1A. The portion E, $E_1$ of the waistband consists of 184 courses of a fabric knitted from Helanca (Trade Mark) yarn 10, a Lycra (Trade Mark) yarn 12 being laid-in in alternate wales and floated across the intervening wales on a 1 x 1 knit/float basis.

The body portion of the brief is then knitted, the portion E, D, B, $E_1$ having the same extent as the waistband portion E, $E_1$. The crotch portion C, A, $C_1$, $A_1$ having an extent of approximately 1/3 of that of the waistband portion E, $E_1$. G, G, are non-symmetrical centres of the crotch portion. The fabric portions E, D, C, G, A, B, $E_1$ and F, $D_1$, $C_1$, $G_1$, $A_1$, $B_1$, $F_1$ are both of plain stitch fabric of Helanca yarn. The edges of a fabric shown in Fig. 1 at D, $D_1$ and B, $B_1$ respectively form the leg openings in the ultimate briefs with the edges C, $C_1$ and A, $A_1$ forming the crotch portion. The structure of the portions C, A, G and $C_1$, $A_1$, $G_1$ are given in Fig. 1B and are

knitted on a 7 x 1 basis from Helanca yarn. The fabric has two spaced wales 14 of plain stitches, the intervening seven wales being knitted at alternate courses 16.

The points $CC_1$ and $AA_1$ indicate the start of the intervening elasticated construction of the crotch the structure of which is illustrated in Fig. 1C. This structure is identical to that of Fig. 1B but with a Lycra yarn used in conjunction with the floated Helanca yarn 20.

The two yarns are knitted together in widely spaced wales only, i.e. only each eighth wale and are elsewhere floated across the intervening wales. Thus, the floats are long ones serving to contract the fabric walewise in the area of the crotch resulting in a related width, d, which is approximately one third of the width $d_1$, of the body portion. Finally, a turned welt similar to E, $E_1$ and of the structure illustrated in Fig. 1A is knitted together with a plain run-off section (not shown). The run-off section is of sufficient length to lock the ends of the tubular waistband portions together to facilitate press-off of a finished tube.

When the tube has been knitted and taken down from the machine, it is slit walewise as described, either with a single or a plurality of slit operations using a hot wire cutter or cutters at each of the two slitting positions where the three needles were omitted.

When the tube is slit, the margin around the leg opening in the finished brief is caused to roll inwards along the lines $BB_1$ and $DD_1$. This is achieved by the structure shown in Figure 1D where alternate courses 32 of elongated floats (each of up to 16 wales) are floated across the loops 34 of the knitted ground structure, terminating on a wale 36. To the right of wale 36, as viewed, are a succession of 1 x 1 float stitches 38 immediately preceding the severed portion at the extreme right of Figure 1D, as viewed. In the structure illustrated in Figure 1D, when slitting occurs, the loops to the right of wale 36, as viewed, cause the fabric edge to roll in on itself, whereas the floated loops 32 to the left of wale 36 cause the fabric to fold back on itself thus providing a neat, automatic selvedge along the leg openings.

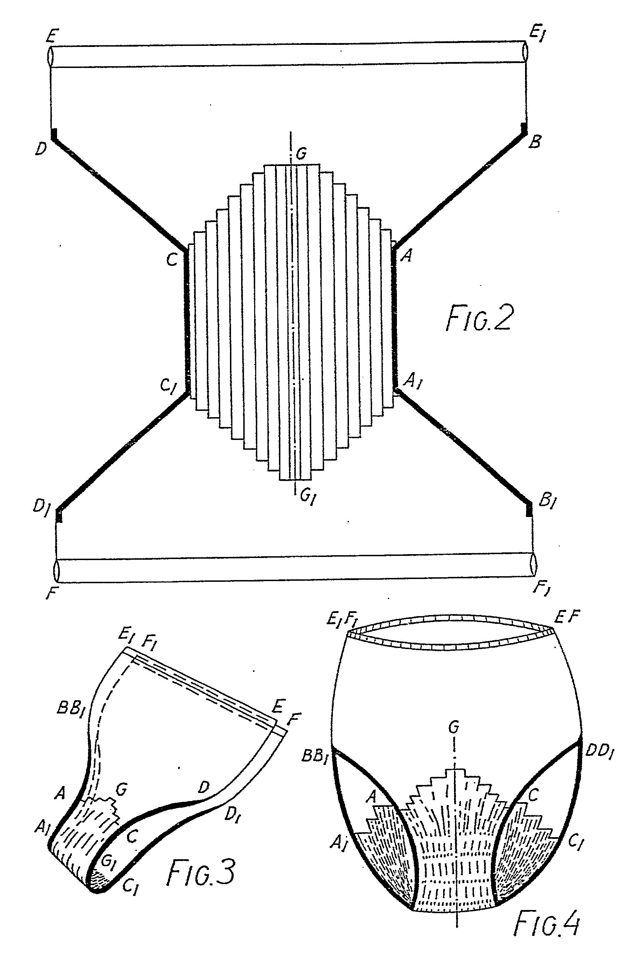

The blank is then folded over as shown Fig. 3 and the side edges of the blanks seamed using an overlock or flat lock machine. A completed brief as shown in Fig. 4 is thus provided.

Alternatively, the tubular blank may be coursewise separated on the machine, the tubular section present after separation being then removed from the machine and slit walewise to provide a plurality of separated brief blanks of the required form.

Example

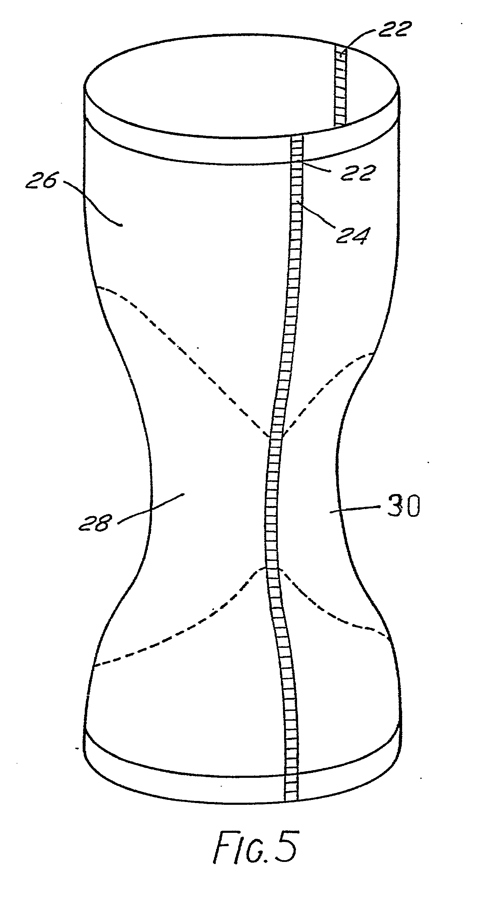

A tubular length of fabric as illustrated in Figure 5 was knitted upon a 5.75 inch diameter circular knitting machine having 512 needles. Two walewise separation positions 22 were provided at each of which three needles were omitted and across which positions yarn 24 was floated. The positions 22 do not extend in a straight line to accommodate the difference in brief blank sizes. One section between separation positions included 320 needles, for manufacture into a ladies brief and the other section included 180 needles, for manufacture into a childs brief. As may be seen from Figure 5, the blank for the ladies brief has the same overall length as the brief for the childs brief.

A different pattern drum was provided for each section, i.e. one for the ladies brief and one for the childs brief, each pattern drum effecting a different needle selection for the crotch portions 28, 30 of the two brief blanks.

The brief blanks were knitted in the manner described with respect to Figure 1 save that in Figure 1 two brief blanks of the same size were knitted whereas in the example the blanks were of different size as indicated above. The tube was then coursewise separated to provide a shortened tube having two walewise connected blanks. With the shortened tube removed from the knitting machine, walewise separation was performed to provide a ladies brief blank and a childs brief blank each of the configuration illustrated in Figure 2. Each of the blanks was then folded over as illustrated in Figure 3 and the side edges of the blank overlocked to form two completed briefs each as illustrated in Figure 4.

It will be appreciated that the invention is not restricted to the production of a ladies and a childs brief. In dependence upon the size of brief required, on the 5.75 inch machine described above, two normal-sized ladies briefs can be produced or three childrens-sized briefs. When two identical briefs are knitted, it has been found that a single pattern drum or other needle selection device, such as an electric device may be used for effecting needle selection.

A major advantage offered by the invention, for example, over the method disclosed in British Patent Number 1 485 952, lies in the fact that an increased number of briefs can be produced in a given floor space on a single machine.

Claims

1. A method of knitting a plurality of brief blanks upon a circular knitting machine characterised by knitting a shaped tube (Fig. 1, Fig. 5) having a plurality of brief blanks inter-connected in side-by-side relationship at walewise separation positions (22), the tube having knitted integral waistband portions (E, E; F, F and Fig. 1A) at each end thereof with the length of the tube between the waistband portions being of hourglass configuration obtained by needle selection (Figs. 1B, 1C), the fabric on either side of the walewise separation positions (22) being knitted such that when the tube is slit walewise the margin around the leg openings in the finished brief is caused to roll over inwardly of the blank (B, B; D, D and Fig. 1) to provide a finished run-proof selvedge.

2. A method according to claim 1 additionally characterised by slitting the tube walewise (22) as it is being knitted on the machine to sever the connection between the inter-connected blanks, and coursewise separating successive blanks to provide a plurality of separated brief blanks of the required form.

3. A method according to claim 2 additionally characterised by individually slitting the tube a plurality of times to provide a corresponding plurality of brief blanks.

4. A method according to claim 3 when used for producing a pair of brief blanks in side-by-side relationship which additionally comprises the step of collapsing the tube and slitting the collapsed tube walewise upon a common slitting device.

5. A method according to claim 2, 3 or 4 characterised in that configuration of each brief blank is determined by needle selection programmed from a common pattern drum or other needle selection system.

6. A method according to claim 1 additionally characterised by coursewise separating a length of tube containing a plurality of blanks inter-connected in side-by-side relationship and slitting the separated tube walewise to sever the connection between the inter-connected blanks to provide a plurality of separated brief blanks of the required form.

7. A method according to claim 6 additionally characterised by individually slitting the tube a plurality of times to provide a corresponding plurality of brief blanks.

8. A method according to claim 6 when used for producing a pair of brief blanks in side-by-side relationship additionally characterised by the step of collapsing the tube and slitting the collapsed tube walewise upon a common slitting device.

9. A method according to claim 6, 7, or 8 characterised in that the configuration of each brief blank is determined by needle section programmed from a common pattern drum or other needle selection system.

## Patentansprüche

1. Verfahren zum Stricken mehrerer Unterhosenzuschnitte auf einer Rundstrickmaschine, dadurch gekennzeichnet, daß ein geformter Schlauch (Fig. 1, Fig. 5) gestrickt wird, der mehrere Unterhosenzuschnitte aufweist, die an in Maschenstäbchenrichtung verlaufenden Trennstellen (22) Seite an Seite miteinander verbunden sind, wobei der Schlauch an jedem Ende eingestrickte Bundabschnitte (E, E; F, F und Fig. 1A) aufweist und das Schlauchstück zwischen den Bundabschnitten eine durch die Nadelwahl (Figuren 1B, 1C) erhaltene Sanduhr-Konfiguration hat, wobei das Gewebe auf beiden Seiten der in Maschenstäbchenrichtung verlaufenden Trennstellen (22) so gestrickt ist, daß sich beim Aufschneiden des Schlauches in Maschenstäbchenrichtung der im fertiggestellten Zuschnitt um die Fußöffnungen befindliche Rand auf der Innenseite des Zuschnitts (B, B; D, D und Fig. 1) aufrollt, wodurch eine fertige, laufmaschensichere Kante entsteht.

2. Verfahren nach Anspruch 1, zusätzlich dadurch gekennzeichnet, daß der Schlauch, während er auf der Maschine gestrickt wird, zur Lösung der Verbindung zwischen den miteinander verbundenen Zuschnitten in Maschenstäbchenrichtung (22) aufgeschnitten wird, und zur Trennung aufeinanderfolgender Zuschnitte voneinander in Maschenreihenrichtung aufgeschnitten wird, um mehrere einzelne Unterhosenzuschnitte der benötigten Form zu erhalten.

3. Verfahren nach Anspruch 2, zusätzlich dadurch gekennzeichnet, daß der Schlauch mehrmals einzeln aufgeschnitten wird, um eine entsprechende Anzahl von Unterhosenzuschnitten zu erhalten.

4. Verfahren nach Anspruch 3 bei der Verwendung zur Herstellung eines Paars Seite an Seite liegender Unterhosenzuschnitte, welches den zusätzlichen Schritt umfaßt, daß der Schlauch zusammengefaltet wird und im zusammengefalteten Zustand auf einer gemeinsamen Aufschneideeinrichtung in Maschenstäbchenrichtung aufgeschnitten wird.

5. Verfahren nach Anspruch 2, 3 oder 4, dadurch gekennzeichnet, daß die Konfiguration jedes Unterhosenzuschnittes durch die aus einer gemeinsamen Mustertrommel oder einem anderen Nadelauswahlsystem programmierte Nadelwahl bestimmt wird.

6. Verfahren nach Anspruch 1, zusätzlich dadurch gekennzeichnet, daß ein mehrere, Seite an Seite miteinander verbundene Zuschnitte enthaltendes Schlauchstück in Maschenreihenrichtung getrennt wird, und der getrennte Schlauch in Maschenstäbchenrichtung zur Lösung der Verbindung zwischen den miteinander verbundenen Zuschnitten aufgeschnitten wird, um mehrere einzelne Unterhosenzuschnitte der benötigten Form zu erhalten.

7. Verfahren nach Anspruch 6, zusätzlich dadurch gekennzeichnet, daß der Schlauch mehrmals einzeln aufgeschnitten wird, um eine entsprechende Anzahl von Unterhosenzuschnitten zu erhalten.

8. Verfahren nach Anspruch 6 bei der Vewendung zur Herstellung eines Paars Seite an Seite liegender Unterhosenzuschnitte, zusätzlich gekennzeichnet durch einen Schritt, bei dem der Schlauch zusammengefaltet wird und im zusammengefalteten Zustand auf einer gemeinsamen Aufschneideeinrichtung in Maschenstäbchenrichtung aufgeschnitten wird.

9. Verfahren nach Anspruch 6, 7 oder 8, dadurch gekennzeichnet, daß die Konfiguration jedes Unterhosenzuschnittes durch die aus einer gemeinsamen Mustertrommel oder einem anderen Nadelauswahlsystem programmierte Nadelwahl bestimmt wird.

## Revendications

1. Méthode pour tricoter une pluralité de pièces découpées à culotte sur une machine à tricoter circulaire caractérisée par le tricotage d'un tube mis en forme (figure 1, figure 5) ayant une pluralité de pièces découpées à culotte reliées entre elles en relation côte à côte à des positions de séparation (22) dans le sens des colonnes de mailles, le tube ayant des parties de la ceinture solidaires tricotées (E, E; F, F et figure 1A) à chaque extrémité de celui-ci, le morceau du tube entre les parties de la ceinture ayant une configuration de sablier obtenue par sélection d'aiguille (figures 1B, 1C), le tissu de chaque côté des positions de séparation (22) dans le sens des colonnes de mailles étant tricoté de telle sorte que lorsque le tube est ouvert dans le sens des colonnes de mailles la marge autour des ouvertures pour les jambes dans la culotte finie est enroulée vers l'intérieur de la pièce découpée (B, B: D, D et figure 1) pour fournir une lisière finie résistante au démaillage.

2. Méthode selon la revendication 1 caractérisée en outre par le fait que l'on ouvre le tube dans le sens des colonnes de mailles (22) alors qu'on le tricote sur la machine pour sectionner la liaison entre les pièces découpées reliées entre elles, et dans le sens des rangées de mailles séparant les pièces découpées successives, pour fournir une pluralité de pièces découpées à culotte séparées de la forme requise.

3. Méthode selon la revendication 2 caractérisée en outre par le fait que l'on ouvre plusieurs sections individuelles dans le tube pour fournir une pluralité correspondante de pièces découpées à culotte.

4. Méthode selon la revendication 3 lorsqu'elle est utilisée pour produire une paire de pièces découpées à culotte en relation côte à côte qui en outre comprend l'étape de plier le tube et d'ouvrir le tube plié dans le sens des colonnes de mailles sur une machine à ouvrir commune.

5. Méthode selon la revendication 2, 3 ou 4 caractérisée en ce que la configuration de chaque pièce découpée à culotte est déterminée par sélection d'aiguille programmée à partir d'un tambour à dessins commun ou d'un autre système de sélection d'aiguille.

6. Méthode selon la revendication 1 caractérisée en outre par la séparation dans le sens des rangées de mailles d'un morceau de tube contenant une pluralité de pièces découpées reliées entre elles en relation côte à côte et par l'ouverture du tube séparé dans le sens des colonnes de mailles pour sectionner la liaison entre les pièces découpées reliées entre elles pour fournir une pluralité de pièces découpées à culotte séparées de la forme requise.

7. Méthode selon la revendication 6 caractérisée en outre en ce que l'on ouvre plusieurs sections individuelles dans le tube pour fournir une pluralité correspondante de pièces découpées à culotte.

8., Méthode selon la revendication 6 lorsqu'elle est utilisée pour produire une paire de pièces découpées à culotte en relation côte à côte caractérisée en outre par l'étape de plier le tube et d'ouvrir le tube plié dans le sens des colonnes de mailles sur une machine à ouvrir commune.

9. Méthode selon la revendication 6, 7 ou 8 caractérisée en ce que la configuration de chaque pièce découpée à culotte est déterminée par sélection d'aiguille programmée à partir d'un tambour à dessins commun ou d'un autre système de sélection d'aiguille.

FIG.1

FIG.1A

FIG.1B

FIG.1C

FIG.1D

FIG.2

FIG.3

FIG.4

FIG.5